**Europäisches Patentamt**

**European Patent Office**

**Office européen des brevets**

(19)

(11) Veröffentlichungsnummer : **0 012 353**
**B1**

(12)                     **EUROPÄISCHE PATENTSCHRIFT**

(45) Veröffentlichungstag der Patentschrift :
21.11.85

(51) Int. Cl.⁴ : **C 08 F279/02 // (C08F279/02, 212:04, 220:10)**

(21) Anmeldenummer : **79104941.4**

(22) Anmeldetag : **05.12.79**

(54) **Hochvernetzte thermoplastisch-elastomere Pfropfpolymerisate.**

(30) Priorität : 12.12.78 DE 2853572

(43) Veröffentlichungstag der Anmeldung :
25.06.80 Patentblatt 80/13

(45) Bekanntmachung des Hinweises auf die Patenterteilung : 21.11.85 Patentblatt 85/47

(84) Benannte Vertragsstaaten :
BE DE FR GB IT NL

(56) Entgegenhaltungen :
FR-A- 2 304 646
US-A- 3 655 824
US-A- 3 935 136
Die Akte enthält technische Angaben, die nach dem Eingang der Anmeldung eingereicht wurden und die nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Müller, Eberhard, Dr.
Hermann-Hesse-Strasse 7
D-5090 Leverkusen (DE)
Erfinder : Ott, Karl-Heinz, Dr.
Paul-Klee-Strasse 54
D-5090 Leverkusen (DE)
Erfinder : Pampus, Gottfried, Dr.
Friedrich-Weskott-Strasse 14
D-5090 Leverkusen (DE)
Erfinder : Schnetger, Jochen, Dr.
Im Obstgarten 9
D-8990 Lindau-Bodolz (DE)

EP 0 012 353 B1

**Beschreibung**

Die vorliegende Anmeldung betrifft thermoplastische, elastomere Pfropfpolymerisate aus einem Gemisch vernetzter Kautschuke als Pfropfbasis und einem Thermoplastanteil von mindestens teilweise aufgepfropften Einheiten von Methylmethacrylat, ggf. im Gemisch mit Styrol.

Bereits bekannte, thermoplastisch verarbeitbare Elastomere sind z. B. Styrol-Butadien-Dreiblockcopolymere (US-Patent 3 265 765). Sie können u. a. entweder durch Umsetzung von Dilithium-Polybutadienen mit Styrol oder durch Verknüpfen von Polystyrol-Polybutadienyl-Lithium-Diblockpolymeren mit geeigneten di- oder mehrfunktionnellen Verbindungen erhalten werden.

Unterhalb der Glastemperatur des Polystyrols zeigen diese Polymere technologische Eigenschaften, die mit denen konventionell hergestellter Kautschukvulkanisate vergleichbar sind. Sie besitzen bei Raumtemperatur ein gutes elastisches Verhalten und hohe Festigkeitswerte bei variablen Härte-Einstellungen. Bei Temperaturen oberhalb des Glasübergangs von Polystyrol befinden sich diese Produkte in einem schmelzähnlichen Zustand und lassen sich wie unvulkanisierte Kautschuke verarbeiten, wobei der Übergang vom kautschuk- zum vulkanisatähnlichen Zustand reversibel ist. Morphologisch gesehen bestehen diese Polymeren aus einer Kautschukmatrix, in welche die damit chemisch verknüpften Polystyroleinheiten (« glassy balls ») eingelagert sind.

Ein wesentlicher Nachteil derartiger Systeme besteht in ihrer geringen Wärmestandfestigkeit, die durch eine gewisse Teilverträglichkeit der Polystyroleinheiten mit der Polybutadienmatrix bedingt ist. So beginnen z. B. die Polystyrolblöcke der Dreiblockelastomeren bereits oberhalb von 60 °C zu erweichen. Außerdem muß bei den üblichen Herstellungsverfahren äußerst sorgfältig gearbeitet werden, da die Festigkeiten z. B. bereits durch geringe Anteile an Polystyrol-Polybutadien-Diblöcken, die durch Abbruchreaktionen mit Verunreinigungen leicht entstehen können, erheblich abfallen.

Bekannt sind außerdem thermoplastische Elastomere, die durch Abmischung von isotaktischem Polypropylen oder Polyethylen mit mehr oder weniger stark vernetzten Ethylen-Propylen-Dien-Terpolymeren oder durch Abmischung von modifiziertem Polyisobutylen mit Polyethylen hergestellt werden (US-Patente 3 758 643, 3 806 558, 3 835 201 und 3 862 106).

Man nimmt an, daß diese Produkte ihre spezifischen Eigenschaften dadurch erhalten, daß sich Thermoplast- und Kautschukanteile durch Verknäuelungen oder Verhakungen miteinander verknüpfen. Bei diesen Produkten ist die Festigkeits-Bruchdehnungs-Relation ungünstig, auch haben sie für bestimmte Anwendungen zu niedrige Elastizität bei tiefen Temperaturen.

Weiterhin bekannt sind Pfropfpolymerisate aus vernetzten Dienkautschuken und Styrol, Styrol/Acrylnitril und Styrol/Acrylnitril/Acrylestern, die eine kugelförmige Verteilung von Kautschukteilchen in einer Harzmatrix aufweisen. Sie zeigen jedoch eine ungünstige Festigkeits-Bruchdehnungs-Relation, haben eher thermoplastische als elastische Eigenschaften und werden zur Schlagfestmachung von Kunststoffen wie Polystyrol, Polycarbonat oder Styrol-Acrylnitril-Copolymerisaten verwendet.

Es wurde nun gefunden, daß Kautschukpfropfpolymerisate aus 55 bis 70, vorzugsweise 60 bis 65 Gew.-% Kautschuk und einem Thermoplastanteil von 30 bis 45, vorzugsweise von 35 bis 40 Gew.-%, die durch Polymerisation von Methylmethacrylat, gegebenenfalls im Gemisch mit Styrol, in Gegenwart eines Gemisches vernetzter Kautschuke erhalten werden, thermoplastische Elastomere darstellen, die gleichzeitig hohe Wärmestandfestigkeit, gute Kälteflexibilität und günstige Festigkeits-Dehnungs-Relationen besitzen.

Gegenstand der Erfindung sind thermoplastisch-elastomere Pfropfpolymerisate aus

a) 55 bis 70 Gew.-% mindestens eines hochvernetzten Kautschuks mit einem Gelanteil von 80 bis 100 Gew.-% aus einem Gemisch von

a1. 50 bis 90 Gew.-% Polybutadien mit einem Quellindex < 20 und

a2. 10 bis 50 Gew.-% eines Acrylnitril-Butadien- oder eines Styrol-Butadien-Copolymeren mit einem Quellindex > 20, einem Acrylnitril- bzw. Styrol-Gehalt von 10-40 Gew.-%, als Pfropfbasis und

b) 30 bis 45 Gew.-% eines Thermoplastanteils aus polymerisierten Einheiten von Methylmethacrylat oder einem Gemisch von Styrol (10-90 Gew.-%) und Methylmethacrylat (10-90 Gew.-%) die zu 10 bis 90, vorzugsweise zu 30 bis 80 Gew.-% aufgepfropft sind.

Die erfindungsgemäßen Elastomeren können nach an sich bekannten Verfahren hergestellt werden, z. B. durch radikalisch initiierte Pfropfung der Monomeren in Emulsion.

Unter hochvernetzten Kautschuken werden solche mit einem Gelgehalt zwischen 80 und 100 Gew.-% und einem Quellindex kleiner als 20 verstanden. Unvernetzte Kautschuke sind solche mit einem Gelgehalt zwischen 0 und 5 Gew.-%, unter teilvernetzten Kautschuken werden solche mit Gelgehalten zwischen 5 und 80 Gew.-% verstanden. Der gewünschte Vernetzungsgrad der Kautschuke kann in an sich bekannter Weise eingestellt werden, z. B. durch Einwirkung radikalbildender Substanzen oder energiereicher Strahlung. Die als Pfropfgrundlage verwendeten Kautschuke werden vorzugsweise in Form ihrer Latices eingesetzt und können Teilchengrößen zwischen 50 und 800 nm haben.

Pfropfgrundlage sind Latices von Gemischen aus Polybutadien (Teilchengröße 200 bis 600 nm, Gelgehalt größer als 80 Gew.-%, Quellindex kleiner als 20) und Styrol-Butadien-Copolymeren (Styrolgehalt 5 bis 30 Gew.-%), Gelgehalt 0 bis 80 Gew.-%, Teilchengröße 100 bis 400 nm) oder Acrylnitril-Butadien-Copolymeren (Acrylnitrilgehalt 10 bis 40 Gew.-%, Gelgehalt 0 bis 80 Gew.-%, Teilchengröße 50 bis 400 nm).

2

Die Latices sollen dabei einen Feststoffgehalt von 50 bis 90 Gew.-% Polybutadien und 10 bis 50 Gew.-% Styrol-Butadien- und/oder Acrylnitril-Butadien-Copolymeren besitzen.

Pfropfpolymere sind Methylmethacrylat, ggf. im Gemisch mit Styrol.

Die Menge des thermoplastischen Anteils im Pfropfpolymerisat beträgt 30 bis 45, vorzugsweise 35 bis 40 Gew.-%, wovon 10 bis 90, vorzugsweise 30-80 Gew.-% aufgepfropft sind.

Die Pfropfäste haben einen L-Wert (in Dimethylformamid bei 25 °C) von 20 bis 120, vorzugsweise von 40 bis 80 (der L-Wert entspricht $\eta$ spez./c für c = 5 g/l).

Die Zugfestigkeiten der Kautschukpfropfpolymerisate liegen zwischen 10 und 26 MPa, ihre (Bruch)-Dehnungen zwischen 200 und 500 %. Sie überstreichen damit bei geringeren, aber für den Anwendungsbereich der thermoplastischen Elastomeren ausreichenden Dehnungen den Festigkeitsbereich der thermoplastischen Styrol-Butadien-Dreiblockelastomeren und sind in der Festigkeits-Dehnungs-Relation Abmischungen aus Polypropylen, und Ethylen-Propylen-Terpolymeren überlegen, die Festigkeiten von 7 bis 16 MPa und Dehnungen von 50 bis 200 % besitzen. Darüber hinaus besitzt ein erfindungsgemäßes Pfropfpolymerisat aus z. B. 60 Gew.-% Polybutadien und 40 Gew.-% Polystyroleinheiten eine um ca. 15 °C höhere Wärmestandfestigkeit als ein in der Zusammensetzung vergleichbares Styrol-Butadien-Dreiblockcopolymerisat.

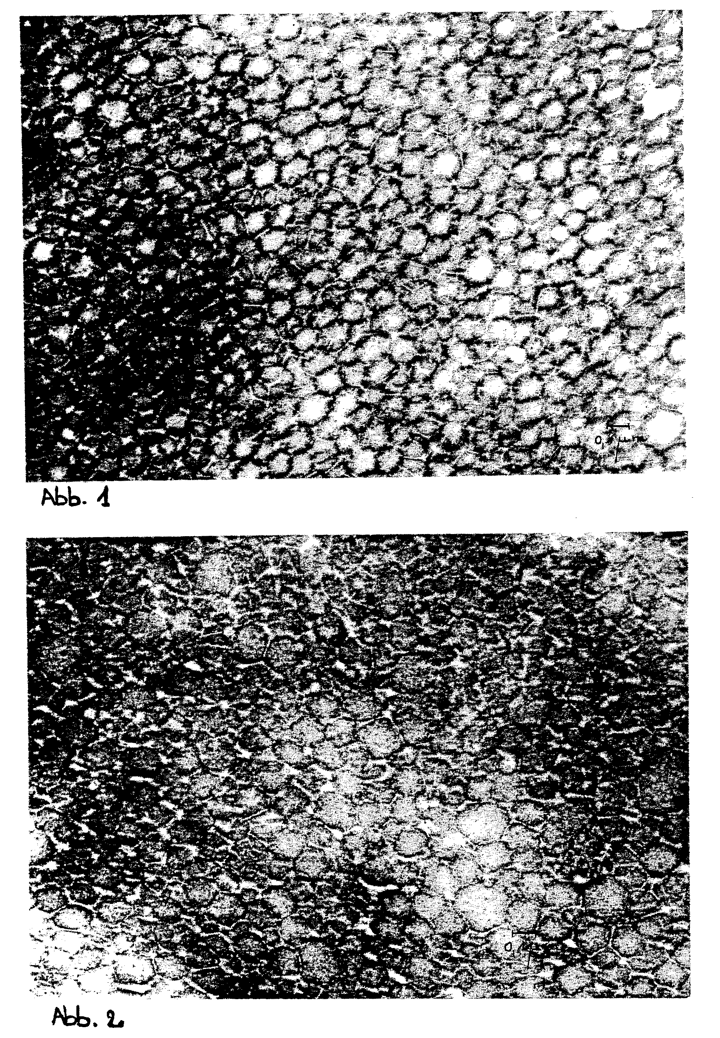

Die erfindungsgemäßen Pfropfpolymerisate, die sich einerseits bei Raumtemperatur wie Kautschukvulkanisate verhalten, können andererseits bei den in der Thermoplasttechnologie üblichen Temperaturen zwischen 160 und 250 °C auf der Walze einwandfrei verarbeitet werden. Auch die Herstellung von Formteilen im Spritzgußverfahren ist problemlos. Gegenüber herkömmlichen Kautschukvulkanisaten besitzen sie erheblich höhere Strukturfestigkeiten von bis zu 700 Newton (N) und darüber. Stellt man aus einem Walzfell Preßplatten her und fertigt davon elektronenmikroskopische Aufnahmen an, dann beobachtet man die in den Abbildungen 1 und 2 wiedergegebene neuartige Morphologie einer regelmäßigen hexagonal-dichtesten Packung von Kautschukteilchen, die durch Thermoplastschichten voneinander getrennt sind. Im Gegensatz zur Struktur von Styrol-Butadien-Dreiblock-Elastomeren oder Abmischungen aus Polypropylen und Ethylen-Propylen-Terpolymeren liegt bei den erfindungsgemäßen elastomeren Pfropfpolymerisaten sowohl eine chemische als auch eine physikalische Verknüpfung der Komponenten vor.

Das folgende Beispiel erläutert die Erfindung. Prozentangaben sind stets Gewichtsprozent.

Beispiel

In einem 6-l-Kolben werden 1 160 g Polybutadienlatex (Teilchengröße 400 nm, Gelgehalt 100 %, Feststoffgehalt 55,8 %), 892 g Styrol-Butadien-Copolymer-Latex (Teilchengröße 150 nm, Gelgehalt 5 %, Feststoffgehalt 24,3 %, Styrolgehalt 24 %) und 1 134 g entsalztes Wasser vorgelegt, mit Stickstoff gespült und auf 63 bis 65 °C aufgeheizt.

Innerhalb von 4 Stunden läßt man zulaufen :

1) 400    g Methylmethacrylat,
2)  42,75 g disproportionierte Abietinsäure (70 %ig als Na-Salz),
     22,0  g 1-n-Natronlauge und
     375   g Wasser.

Man polymerisiert weitere 4 Stunden bei 63 bis 65 °C unter Rühren, kühlt ab und filtriert.

Tabelle

| % Styrol | % Methylmethacrylat | % Kautschuk 1 | % Kautschuk 2 | Zugfestigkeit (MPa) | Bruchdehnung (%) | Strukturfestigkeit (N) |
|---|---|---|---|---|---|---|
| – | 32 | 51 PB | 17 SB | 18,6 | 400 | 200 |

a) PB = Polybutadien
b) SB = Styrol-Butadien-Copolymerisat

**Patentanspruch**

Thermoplastisch-elastomere Pfropfpolymerisate aus

a) 55 bis 70 Gew.-% mindestens eines hochvernetzten Kautschuks mit einem Gelanteil von 80 bis 100 Gew.-% aus

a1. 50 bis 90 Gew.-% Polybutadien mit einem Quellindex < 20 und

a2. 10 bis 50 Gew.-% eines Acrylnitril-Butadien- oder eines Styrol-Butadien-Copolymeren mit einem Quellindex > 20, einem Acrylnitril- bzw. Styrol-Gehalt von 10 bis 40 Gew.-%, als Pfropfbasis und

b) 30 bis 45 Gew.-% eines Thermoplastanteils aus polymerisierten Einheiten von Methylmethacrylat oder einem Gemisch von Styrol (10-90 Gew.-%) und Methylmethacrylat (10-90 Gew.-%, die zu 10 bis 90 Gew.-% aufgepfropft sind.

**Claim**

Thermoplastic-elastomeric graft polymers of

a) 55 to 70 % by weight of at least one highly cross-linked rubber having a gel content of 80 to 100 % by weight and consisting of

a1. 50 to 90 % by weight of polybutadiene having a swelling index of < 20 and

a2. 10 to 50 % by weight of an acrylonitrile/butadiene or styrene/butadiene copolymer having a swelling index of > 20 and an acrylonitrile or styrene content of 10 to 40 % by weight, as the graft base and

b) 30 to 45 % by weight of a thermoplastic component consisting of polymerised units of methyl methacrylate or a mixture of styrene (10-90 % by weight) and methyl methacrylate (10-90 % by weight), 10 to 90 % by weight of which are grafted on.

**Revendication**

Polymères greffés thermoplastiques-élastomères, caractérisés en ce qu'ils consistent en :

a) 55 à 70 % en poids d'au moins un caoutchouc fortement réticulé ayant une fraction de gel de 80 à 100 % en poids, constitué de

a1. 50 à 90 % de polybutadiène d'un indice de gonflement inférieur à 20 et

a2. 10 à 50 % en poids d'un copolymère acrylonitrile-butadiène ou d'un copolymère styrène-butadiène d'un indice de gonflement supérieur à 20, d'une teneur en acrylonitrile ou en styrène de 10-40 % en poids, comme support de greffe, et

b) 30 à 45 % en poids d'une fraction de thermoplaste de motifs polymérisés de méthacrylate de méthyle ou d'un mélange de 10-90 % en poids de styrène et 10-90 % en poids de méthacrylate de méthyle, qui sont greffés à 10-90 % en poids, de préférence à 30-80 % en poids.

Abb. 1

Abb. 2